# EUROPEAN PATENT SPECIFICATION

(11) **EP 4 209 422 B1**
(45) Date of publication and mention of the grant of the patent: **30.10.2024**
(21) Application number: 23150025.7
(22) Date of filing: 02.01.2023
(51) Int. Cl.: B60S 3/04, B64G 99/00, B64G 1/16

(54) **DUST REMOVAL FROM A VEHICLE**
ENTSTAUBUNG EINES FAHRZEUGS
DÉPOUSSIÉRAGE D'UN VÉHICULE

(30) Priority: 11.01.2022 US 202217572820
(43) Date of publication of application: 12.07.2023
(73) Proprietor: Hamilton Sundstrand Corporation, Charlotte, NC 28217-4578 (US)
(72) Inventor: STRICKLAND, Julie, Houston, 77062 (US); HIMMELMANN, Ashley Rose, Beloit, 53511 (US); KAPLAN, Daniel, Melbourne Beach, 32951 (US)
(74) Representative: Dehns

(56) References cited:
- CN-A- 108 195 599
- CN-A- 109 050 976
- CN-A- 109 334 794
- US-A- 5 971 159
- ARIAS FRANCISCO J ET AL: "Magnetic Mars dust-removal technology", CEAS SPACE JOURNAL, SPRINGER VIENNA, SPRINGER WIEN, AUSTRIA, vol. 11, no. 2, 4 February 2019 (2019-02-04), pages 235 - 239, XP036763177, ISSN: 1868-2502, [retrieved on 20190204], DOI: 10.1007/S12567-019-0235-Y

## Description

### BACKGROUND

Exemplary embodiments pertain to the art of vehicles and, in particular, to dust removal from a vehicle.

Vehicles in different environments being used for different applications may become coated with dust, gravel, and other debris. In a space application, for example, an extraterrestrial vehicle may be caked with regolith (i.e., loose debris) or soil from a planetary surface. An extraterrestrial vehicle, often referred to as a rover, is a vehicle that is used on the surface of a planet other than Earth. An extraterrestrial vehicle may be manned or may be unmanned and operated autonomously or via remote control. In addition, an extraterrestrial vehicle may have wheels or other mechanisms for movement such as tracks, for example. An extraterrestrial vehicle may be used to transport astronauts and collect soil and other samples, among other things. "ARIAS FRANCISCO J ET AL: "Magnetic Mars dust-removal technology", CEAS SPACE JOURNAL, SPRINGER VIENNA, SPRINGER WIEN, AUSTRIA, vol. 11, no. 2, 4 February 2019 (2019-02-04), pages 235-239, discloses a method for shaking solar panels on a spacecraft in order to remove the dust. CN109334794 discloses an extraterrestrial vehicle with a piezoelectric drive, and vibrating piezoelectric elements in the chassis which help alleviate and get rid of the binding of the moon dust.

### BRIEF DESCRIPTION

In one embodiment, a system for use on a planetary surface includes ridges arranged parallel to each other. The ridges support a weight of an extraterrestrial vehicle rolling over the ridges. The system also includes a base to maintain a relative position of the ridges to each other and a controller to control one or more of the ridges to vibrate.

Additionally or alternatively, the base is flexible to conform to the planetary surface.

Additionally or alternatively, the base is rigid.

Additionally or alternatively, the ridges are non-planar such that a height of at least one of the ridges is different than a height of at least another of the ridges.

Additionally or alternatively, the ridges are planar such that each of the ridges has a same height.

Additionally or alternatively, the ridges are hollow.

Additionally or alternatively, the ridges are solid.

Additionally or alternatively, a cross-sectional shape of the ridges is circular, rectangular, triangular, or trapezoidal.

Additionally or alternatively, a distance between adjacent ones of the ridges is uniform.

Additionally or alternatively, a distance between adjacent ones of the ridges is non-uniform.

In another embodiment, a method of assembling a system for use on a planetary surface includes arranging ridges parallel to each other. The ridges support a weight of an extraterrestrial vehicle rolling over the ridges. The method also includes configuring a base to maintain a relative position of the ridges to each other and coupling a controller to control one or more of the ridges to vibrate.

Additionally or alternatively, the configuring the base includes the base being flexible to conform to the planetary surface.

Additionally or alternatively, the configuring the base includes the base being rigid.

Additionally or alternatively, the arranging the ridges includes arranging non-planar ridges such that a height of at least one of the ridges is different than a height of at least another of the ridges.

Additionally or alternatively, the arranging the ridges includes arranging planar ridges such that each of the ridges has a same height.

Additionally or alternatively, the arranging the ridges includes arranging hollow ridges.

Additionally or alternatively, the arranging the ridges includes arranging solid ridges.

Additionally or alternatively, the arranging the ridges includes a cross-sectional shape of the ridges being circular, rectangular, triangular, or trapezoidal.

Additionally or alternatively, the arranging the ridges includes a distance between adjacent ones of the ridges being uniform.

Additionally or alternatively, the arranging the ridges includes a distance between adjacent ones of the ridges being non-uniform.

### BRIEF DESCRIPTION OF THE DRAWINGS

The following descriptions should not be considered limiting in any way. With reference to the accompanying drawings, like elements are numbered alike:
FIG. 1 illustrates an exemplary dust loosening system for dust removal from an extraterrestrial vehicle according to one or more embodiments;
FIG. 2 illustrates another exemplary dust loosening system for dust removal from an extraterrestrial vehicle according to one or more embodiments; and
FIGS. 3A to 3E are cross-sectional views of ridges of a dust loosening system for dust removal from an extraterrestrial vehicle according to one or more embodiments.

### DETAILED DESCRIPTION

A detailed description of one or more embodiments of the disclosed apparatus and method are presented herein by way of exemplification and not limitation with reference to the Figures.

Embodiments of the systems and methods detailed herein relate to dust removal from a vehicle. As previously noted, vehicles may become coated in dust, debris, and the like. Anything that coats or adheres to the vehicle is generally referred to herein as dust. As also noted, an extraterrestrial vehicle refers to a manned or unmanned vehicle that is used on the surface of a planet other than Earth. An extraterrestrial vehicle and a system for use on a planetary surface are specifically discussed for explanatory purposes. However, the dust loosening detailed herein may be applicable to any vehicle in any environment. Movement on a planetary surface, whether by an extraterrestrial vehicle or an astronaut in an extravehicular mobility unit (EMU), can generate a dust cloud that adheres to the extraterrestrial vehicle or EMU. Planetary dust (e.g., regolith, soil) has been found to cause scar tissue in lungs and may be linked with brain cancer, and Martian dust has been found to be toxic. Based on its density and volume, the dust may inhibit smooth movement of the extraterrestrial vehicle over time. Additionally, the dust may settle in electronics and cause malfunctions.

According to one or more embodiments, dust is essentially shaken off the extraterrestrial vehicle by driving over a dust loosening system. Loosening the dust to allow it to fall off the extraterrestrial vehicle is accomplished by driving the extraterrestrial vehicle onto and over a set of ridges, at least one of which may be vibrating. The ridges may be non-planar (i.e., have non-uniform heights) and may be formed of hollow tubes or solid rods of different cross-sectional shapes. The dust loosening system may be rolled or folded for easy transport into the planetary environment, as well as transport by the extraterrestrial vehicle for use at any time.

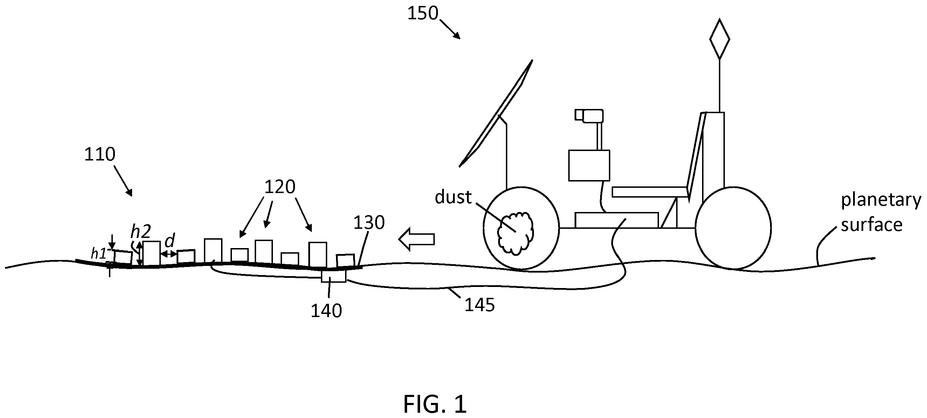

FIG. 1 illustrates an exemplary dust loosening system 110 for dust removal from an extraterrestrial vehicle 150 according to one or more embodiments. The dust loosening system 110 includes ridges 120 that are arranged parallel to each other. As shown, the cross-sectional shapes of the ridges 120 are square or rectangular. The parallel arrangement of the ridges 120 is perpendicular to the direction of travel of the extraterrestrial vehicle 150, as indicated. The bumpiness resulting from the extraterrestrial vehicle 150 traveling over the ridges 120 may shake off dust from the extraterrestrial vehicle 150.

As shown, the ridges 120 are separated from each other by a distance d and the ridges 120 are non-planar. That is, adjacent ridges 120 have different heights. Specifically, two different heights *h1, h2* are shown for the ridges 120. The different heights may increase the bumpiness and, thus, enhance the dust removal. In alternate embodiments, the ridges 120 may be planar (i.e., have the same height) or may have any number of different heights. In addition, the distance d between adjacent ridges 120 may not be the same. The arrangement of the ridges 120 is maintained by a base 130. In the exemplary illustration of FIG. 1, the base 130 is flexible and solid like a mat. Thus, the base 130 and ridges 120 may roll or fold for transport and storage. For example, the dust loosening system 110 may be carried on the extraterrestrial vehicle 150 and the astronauts may roll or fold out the base 130 for use as needed. The flexibility of the base 130 allows the base 130 to conform to the planetary surface, as shown.

A controller 140 is shown connected to one of the ridges 120. In alternate embodiments, the controller 140 may be connected to any number of ridges 120. The controller 140 may be battery-powered or may be powered via a power cable 145 connected to the extraterrestrial vehicle 150, as shown, or a fixed source. The controller 140 controls one or more ridges 120 to vibrate according to known techniques (e.g, applies mechanical or acoustic stimulus). The controller 140 may change the frequency of vibration based on a level of dust or the type of extraterrestrial vehicle 150, for example. The frequency change may be performed automatically based on sensors (e.g., camera) or may be manually set by an astronaut. The vibration may further increase dust removal from the extraterrestrial vehicle 150. The extraterrestrial vehicle 150 may pause on the dust loosening system 110 during the vibration of the ridge 120.

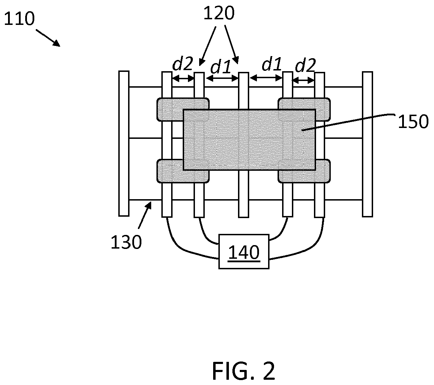

FIG. 2 illustrates another exemplary dust loosening system 110 for dust removal from an extraterrestrial vehicle 150 according to one or more embodiments. While the view in FIG. 1 is a side view, the view in FIG. 2 is a top-down view illustrating the parallel arrangement of the ridges 120. While the base 130 shown in FIG. 1 is solid, the base 130 shown in FIG. 2 includes flexible connectors (e.g., chains) or rigid connectors (e.g., beams). In the exemplary case of rigid connectors, an angled base 130 and dust loosening system 110 (i.e., a ramp) may be achieved. As indicated, the controller 140 is connected to four of the ridges 120 and may control one or more of the ridges 120 to vibrate.

According to the exemplary embodiment, the distance d2 between each pair of ridges 120 that vibrate and the distance 2**d1* between the pairs may be selected such that the wheels of the extraterrestrial vehicle 150 may be parked on the vibrating ridges 120, as shown. The extraterrestrial vehicle 150 may traverse the dust loosening system 110 more than once. For example, the extraterrestrial vehicle 150 may park, as shown, to allow vibration of the ridges 120 to loosen dust during one cycle. The extraterrestrial vehicle 150 may then driver across all the ridges 120 without stopping during a subsequent cycle.

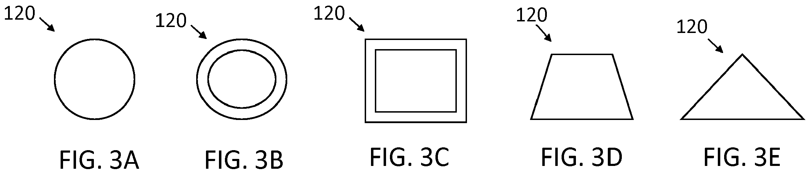

FIGS. 3A to 3E are cross-sectional views of ridges 120 of a dust loosening system 110 for dust removal from a extraterrestrial vehicle 150 according to one or more embodiments. The material and dimensions of the ridges 120 are selected to support the weight of the extraterrestrial vehicle 150 without deformation. Exemplary materials include stainless, aluminum, and composites that provide the requisite strength to support the weight of the extraterrestrial vehicle 150 while facilitating easy transport through light weight. FIG. 3A shows a solid circular cross-sectional shape (i.e., rod) for the ridges 120. In order to achieve a non-planar dust loosening system 110, the diameter of some of the ridges 120 may be changed or the shape of some of the ridges 120 may be changed (e.g., may be oval). That is, all of the ridges 120 of a given dust loosening system 110 may not have the same cross-sectional shape.

FIG. 3B shows a hollow circular cross-sectional shape (i.e., pipe) for the ridges 120. While the cross-sectional shapes of the ridges 120 in FIG. 1 may be solid, the cross-sectional shape of the ridge 120 shown in FIG. 3C is a hollow rectangle. FIG. 3D shows a trapezoidal cross-sectional shape for the ridges 120 and FIG. 3E shows a triangular cross-sectional shape. The exemplary cross-sectional shapes are not intended to limit alternate or additional cross-sectional shapes that may be used for the ridges 120.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for use on a planetary surface, the system being **characterized by**:
ridges (120) arranged parallel to each other, wherein the ridges are configured to support a weight of an extraterrestrial vehicle (150) rolling over the ridges;
a base (130) configured to maintain a relative position of the ridges (120) to each other; and
a controller (140) configured to control one or more of the ridges (120) to vibrate.

2. The system according to claim 1, wherein the base (130) is flexible and configured to conform to the planetary surface; or, alternatively, wherein the base (130) is rigid.

3. The system according to claim 1 or 2, wherein the ridges (120) are non-planar such that a height of at least one of the ridges (120) is different than a height of at least another of the ridges (120).

4. The system according to claim 1 or 2, wherein the ridges (120) are planar such that each of the ridges (120) has a same height.

5. The system according to any preceding claim, wherein the ridges (120) are hollow; or, alternatively, wherein the ridges (120) are solid.

6. The system according to any preceding claim, wherein a cross-sectional shape of the ridges (120) is circular, rectangular, triangular, or trapezoidal.

7. The system according to any preceding claim, wherein a distance between adjacent ones of the ridges (120) is uniform; or, alternatively, wherein a distance between adjacent ones of the ridges (120) is non-uniform.

8. A method of assembling a system for use on a planetary surface, the method comprising:
arranging ridges parallel to each other, wherein the ridges are configured to support a weight of an extraterrestrial vehicle rolling over the ridges;
configuring a base to maintain a relative position of the ridges to each other; and
coupling a controller to control one or more of the ridges to vibrate.

9. The method according to claim 8, wherein the configuring the base includes the base being flexible to conform to the planetary surface.

10. The method according to claim 8, wherein the configuring the base includes the base being rigid.

11. The method according to any of claims 8-10, wherein the arranging the ridges includes arranging non-planar ridges such that a height of at least one of the ridges is different than a height of at least another of the ridges.

12. The method according to any of claims 8-10, wherein the arranging the ridges includes arranging planar ridges such that each of the ridges has a same height.

13. The method according to any of claims 8-12, wherein the arranging the ridges includes arranging hollow ridges; or, alternatively, wherein the arranging the ridges includes arranging solid ridges.

14. The method according to any of claims 8-13, wherein the arranging the ridges includes a cross-sectional shape of the ridges being circular, rectangular, triangular, or trapezoidal.

15. The method according to any of claims 8-14, wherein the arranging the ridges includes a distance between adjacent ones of the ridges being uniform; or, alternatively,
wherein the arranging the ridges includes a distance between adjacent ones of the ridges being non-uniform.

## Patentansprüche

1. System zur Verwendung auf einer Planetenoberfläche, wobei das System durch Folgendes gekennzeichnet ist:
parallel zueinander angeordnete Rippen (120), wobei die Rippen zum Tragen eines Gewichts eines über die Rippen rollenden extraterrestrischen Fahrzeugs (150) konfiguriert sind;
eine Basis (130), die zum Aufrechterhalten einer relativen Position der Rippen (120) zueinander konfiguriert ist; und
eine Steuerung (140), die zum Steuern einer oder mehrerer der Rippen (120), sodass sie vibrieren, konfiguriert ist.

2. System nach Anspruch 1, wobei die Basis (130) flexibel ist und zum Anpassen an die Planetenoberfläche konfiguriert ist; oder alternativ
wobei die Basis (130) starr ist.

3. System nach Anspruch 1 oder 2, wobei die Rippen (120) nicht eben sind, sodass sich eine Höhe von mindestens einer der Rippen (120) von einer Höhe von mindestens einer anderen der Rippen (120) unterscheidet.

4. System nach Anspruch 1 oder 2, wobei die Rippen (120) eben sind, sodass jede der Rippen (120) die gleiche Höhe aufweist.

5. System nach einem der vorhergehenden Ansprüche, wobei die Rippen (120) hohl sind; oder alternativ
wobei die Rippen (120) massiv sind.

6. System nach einem der vorhergehenden Ansprüche, wobei eine Querschnittsform der Rippen (120) kreisförmig, rechteckig, dreieckig oder trapezförmig ist.

7. System nach einem der vorhergehenden Ansprüche, wobei ein Abstand zwischen benachbarten der Rippen (120) einheitlich ist; oder alternativ
wobei ein Abstand zwischen benachbarten der Rippen (120) nicht einheitlich ist.

8. Verfahren zum Zusammenbauen eines Systems zur Verwendung auf einer Planetenoberfläche, wobei das Verfahren Folgendes umfasst:
Anordnen von Rippen parallel zueinander, wobei die Rippen zum Tragen eines Gewichts eines über die Rippen rollenden extraterrestrischen Fahrzeugs konfiguriert sind;
Konfigurieren einer Basis zum Aufrechterhalten einer relativen Position der Rippen zueinander; und
Koppeln einer Steuerung zum Steuern einer oder mehrerer der Rippen, sodass sie vibrieren.

9. Verfahren nach Anspruch 8, wobei das Konfigurieren der Basis beinhaltet, dass die Basis zum Anpassen an die Planetenoberfläche flexibel ist.

10. Verfahren nach Anspruch 8, wobei das Konfigurieren der Basis beinhaltet, dass die Basis starr ist.

11. Verfahren nach einem der Ansprüche 8-10, wobei das Anordnen der Rippen Anordnen nicht ebener Rippen beinhaltet, sodass sich eine Höhe von mindestens einer der Rippen von einer Höhe von mindestens einer anderen der Rippen unterscheidet.

12. Verfahren nach einem der Ansprüche 8-10, wobei das Anordnen der Rippen Anordnen ebener Rippen beinhaltet, sodass jede der Rippen die gleiche Höhe aufweist.

13. Verfahren nach einem der Ansprüche 8-12, wobei das Anordnen der Rippen Anordnen von hohlen Rippen beinhaltet; oder alternativ
wobei das Anordnen der Rippen Anordnen von massiven Rippen beinhaltet.

14. Verfahren nach einem der Ansprüche 8-13, wobei das Anordnen der Rippen beinhaltet, dass eine Querschnittsform der Rippen kreisförmig, rechteckig, dreieckig oder trapezförmig ist.

15. Verfahren nach einem der Ansprüche 8-14, wobei das Anordnen der Rippen beinhaltet, dass ein Abstand zwischen benachbarten der Rippen einheitlich ist; oder alternativ
wobei das Anordnen der Rippen beinhaltet, dass ein Abstand zwischen benachbarten der Rippen nicht einheitlich ist.

## Revendications

1. Système pour une utilisation sur une surface planétaire, le système étant **caractérisé par** :
des crêtes (120) agencées parallèlement les unes aux autres, dans lequel les crêtes sont configurées pour supporter le poids d'un véhicule extraterrestre (150) roulant sur les crêtes ;
une base (130) configurée pour maintenir une position relative des crêtes (120) les unes par rapport aux autres ; et
un dispositif de commande (140) configuré pour commander l'une ou plusieurs des crêtes (120) pour qu'elles vibrent.

2. Système selon la revendication 1, dans lequel la base (130) est flexible et configurée pour se conformer à la surface planétaire ; ou, en variante,
dans lequel la base (130) est rigide.

3. Système selon la revendication 1 ou 2, dans lequel les crêtes (120) ne sont pas planes de sorte qu'une hauteur d'au moins l'une des crêtes (120) est différente d'une hauteur d'au moins une autre des crêtes (120).

4. Système selon la revendication 1 ou 2, dans lequel les crêtes (120) sont planes de sorte que chacune des crêtes (120) a une même hauteur.

5. Système selon une quelconque revendication précédente, dans lequel les crêtes (120) sont creuses ; ou, en variante,
dans lequel les crêtes (120) sont pleines.

6. Système selon une quelconque revendication précédente, dans lequel la forme en coupe transversale des crêtes (120) est circulaire, rectangulaire, triangulaire ou trapézoïdale.

7. Système selon une quelconque revendication précédente, dans lequel une distance entre des crêtes adjacentes des crêtes (120) est uniforme ; ou, en variante,
dans lequel une distance entre des crêtes adjacentes des crêtes (120) n'est pas uniforme.

8. Procédé d'assemblage d'un système pour une utilisation sur une surface planétaire, le procédé comprenant :
l'agencement de crêtes parallèlement les unes aux autres, dans lequel les crêtes sont configurées pour supporter le poids d'un véhicule extraterrestre roulant sur les crêtes ;
la configuration d'une base pour maintenir une position relative des crêtes les unes par rapport aux autres ; et
le couplage d'un dispositif de commande pour commander l'une ou plusieurs des crêtes pour qu'elles vibrent.

9. Procédé selon la revendication 8, dans lequel la configuration de la base comporte la base étant flexible pour se conformer à la surface planétaire.

10. Procédé selon la revendication 8, dans lequel la configuration de la base comporte la base étant rigide.

11. Procédé selon l'une quelconque des revendications 8 à 10, dans lequel l'agencement des crêtes comporte l'agencement de crêtes non planes de sorte qu'une hauteur d'au moins l'une des crêtes est différente d'une hauteur d'au moins une autre des crêtes.

12. Procédé selon l'une quelconque des revendications 8 à 10, dans lequel l'agencement des crêtes comporte l'agencement de crêtes planes de sorte que chacune des crêtes a une même hauteur.

13. Procédé selon l'une quelconque des revendications 8 à 12, dans lequel l'agencement des crêtes comporte l'agencement de crêtes creuses ; ou, en variante,
dans lequel l'agencement des crêtes comporte l'agencement de crêtes pleines.

14. Procédé selon l'une quelconque des revendications 8 à 13, dans lequel l'agencement des crêtes comporte une forme en coupe transversale des crêtes étant circulaire, rectangulaire, triangulaire ou trapézoïdale.

15. Procédé selon l'une quelconque des revendications 8 à 14, dans lequel l'agencement des crêtes comporte une distance entre des crêtes adjacentes des crêtes étant uniforme ; ou, en variante,
dans lequel l'agencement des crêtes comporte une distance entre des crêtes adjacentes des crêtes n'étant pas uniforme.
